# EUROPEAN PATENT APPLICATION

(11) **EP 2 680 145 A2**
(43) Date of publication of application: **01.01.2014**
(21) Application number: 13305879.2
(22) Date of filing: 25.06.2013
(51) Int. Cl.: G06F 9/50

(54) **Monitoring of heterogeneous saas usage**

(30) Priority: 29.06.2012 US 201261666585 P
(71) Applicant: Orange, 75015 Paris (FR)
(72) Inventor: Gay, Julian, San Francisco, CA 94110 (US); Lee, Dominic, Sunnyvale, CA 94086 (US); Nuzhnyi, Pylyp, San Francisco, CA 94103 (US)

(57) **Abstract**

A method is provided for optimizing future resource usage in a cloud environment comprising first and second cloud services, each cloud service being associated with at least one of technical and business restrictions defining a maximum capacity, the method comprising: monitoring current usage patterns of the cloud services; predicting future usage patterns based on the monitored usages; calculating an estimated future time to reach a technical or business restriction for the first cloud service based on the predicted future usage patterns; and adjusting, at a later time associated with the estimated future time, the maximum capacity associated with at least one of the first cloud service and the second cloud service based on the calculation of the estimated future time.

## Description

### BACKGROUND

In order for an individual or business entity to prepare a computer resource utilization strategy, it is important to understand current usage patterns along with relevant trends so that any additional needed capacities can be anticipated in advance of their need. For example, an individual who routinely adds 5GB of photographs to their disk drive should know that the remaining 10GB of free disk space will be gone in two months. With this knowledge, the user can anticipate the need and therefore buy a new disk drive within the two months and prior to the actual need.

Computing resources are typically monitored at a technical level by examining low-level attributes such as CPU capacity, memory, and disk space. System and network status are made available to IT administrators through monitoring dashboards, and exceptions may be communicated through alerts and messages (such as SMS alerts).

Businesses are increasingly reliant on software-as-a-service- (SaaS-) based services (like Salesforce, Box.net and Dropbox services) for mission-critical infrastructure. There is the need to monitor and optimize service usage aside from access to the low-level underlying technology resources in a cloud-based environment.

Optimal use of cloud-based services are generally dependent on three factors: usage patterns, technical constraints, and business constraints. These are defined as follows. Usage patterns may incorporate usage patterns for individuals, for individuals in a group, and for the group as a whole. Usage patterns may include values associated with: frequency of access to the SaaS-based service, volume of access requests to the service or supporting application program interfaces (APIs) (e.g., uploading and downloading content) and interactions with different types of content (e.g., files, contacts, plans).

Examples of technical constraints could include the number of API requests/hour, individual and group limits on storage capacity, network bandwidth, and processor bandwidth. Business constraints consider different business models and billing structures that include, e.g.: subscription based service pricing, tiered pricing, per use pricing, and per user pricing.

What is needed is a method for dynamically optimizing utilization of SaaS-based services based upon a multiplicity of factors including usage patterns, technical constraints, and business account parameters.

### SUMMARY

An SaaS Broker and associated method are provided for dynamically optimizing utilization of SaaS-based services based upon a multiplicity of factors including usage patterns, technical constraints, and business account parameters. Since the SaaS Broker has access to, or can obtain, a wide range of information about the services offered as well as usage patterns of the service users, an optimum system can be maintained, particularly with regard to expandable cloud services.

Based on the analysis of the usage patterns, the technical restrictions, and/or the business restrictions, the SaaS Broker can predict how soon the technical and/or business restrictions will be reached. When there are multiple cloud services, not all of them will reach their technical restrictions at the same pace. Since the cloud/SaaS Broker has a view across all cloud services and their usage, it can anticipate how fast the technical and/or business restrictions are reached and offer off loading strategies. Furthermore, by incorporating the respective business strategies and constraints into the decisions, an optimum solution can be obtained from both a technical and a business standpoint.

The technical restrictions can deal with aspects related to capacity, such as processor capacity, storage capacity, bandwidth capacity, architectural constraints, such as protocol-related issues, etc. The business restrictions can deal with aspects such as costs (per user, per unit (storage, processor, network bandwidth), per subscription, and also pricing tiers, geographic proximity, availability (e.g., only available during day-time business hours), etc.).

Accordingly, a method is provided for optimizing future resource usage in a cloud environment comprising first and second cloud services, each cloud service being associated with at least one of technical and business restrictions defining a maximum capacity, the method comprising: monitoring current usage patterns of the cloud services; predicting future usage patterns based on the monitored usages; calculating an estimated future time to reach a technical or business restriction for the first cloud service based on the predicted future usage patterns; and adjusting, at a later time associated with the estimated future time, the maximum capacity associated with at least one of the first cloud service and the second cloud service based on the calculation of the estimated future time.

An appertaining system and software media comprising instructions for executing the method are also provided.

### DESCRIPTION OF THE DRAWINGS

- Figure 1: is a block diagram illustrating consolidated monitoring across heterogeneous SaaS services;
- Figure 2: is a basic flow diagram illustrating an embodiment of the monitoring process;
- Figure 3: is a basic flow diagram illustrating a further embodiment of the monitoring process; and
- Figure 4: is a timeline illustrating an exemplary sequencing.

### DETAILED DESCRIPTION

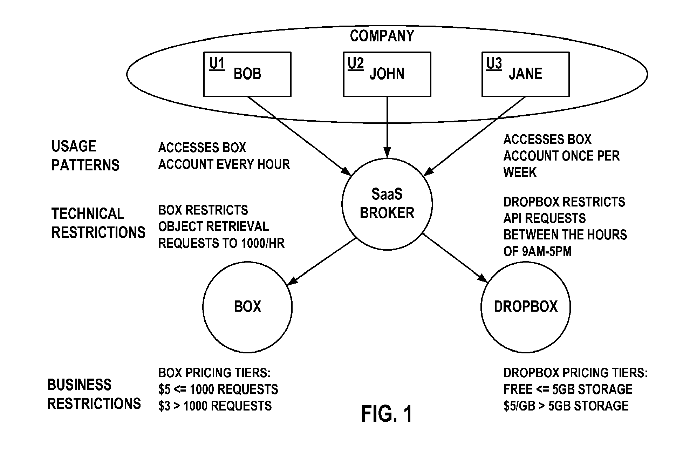

Figure 1 illustrates an exemplary company having three employees: Bob U1, John U2, and Jane U3. The company has an account with two file storage services: Box and Dropbox.

The users have individual accounts within the services. In Box, their accounts are managed and paid for under a single corporate account (i.e., there are heterogeneous billing relationships). In Dropbox, each user has a separate account which is individually billed to the company. The users store project files in either Box or Dropbox (since both services provide similar file storage capabilities).

Bob U1, John U2, and Jane U3 have enabled an SaaS Broker to access their accounts (through a mechanism like OAuth) for the purpose of indexing their content (for example). The SaaS Broker monitors the service usage of each user individually, and also, in aggregate across the company. With knowledge of how users interact with the two services, the SaaS Broker can proactively warn the users of impending limits to their use of the services (for example, running out of storage capacity or reaching a subscription threshold, such as number of concurrent users).

By leveraging the SaaS Broker's perspective across services, the broker can project capacity needs and suggest alternative services or actions, for example, moving files from an active project to Dropbox because the company's group account has spare capacity. Thus the SaaS Broker can perform content and context-sensitive predictive resource estimation across heterogeneous cloud-services.

As illustrated in Figure 1, regarding usage patterns, Bob U1 accesses his Box account every hour, whereas Jane U3 only accesses her Box account once per week. For technical restrictions, Box restricts object requests to 1000 requests/hour. Dropbox restricts API requests between the hours of 9am and 5pm. For business restrictions, Box prices the first 1000 requests at $5, and subsequent 1000 requests at $3. Dropbox allows its users 5GB of free storage, and then charges $5 per month for each additional 5GB of storage.

The following example illustrates how service optimization might work in the context of file storage. In this example, there are two file storage services: Box and Dropbox. In the business model for the Box service, accounts are priced by storage tiers (i.e., volume of data stored in bytes and priced at various volume thresholds). In the business model for the Dropbox service, the accounts are priced by a numbers of documents stored (irrespective of their size).

With regard to the Box service, the company has a Basic account with a 20GB threshold. It adds documents to the Box service at an average rate of 1 GB/week (comprised of 100 documents/week). Therefore, a predictive algorithm determines that the company will reach capacity in the Box-Basic account in approximately 20 weeks (critical date is Date 2).

With regard to the Dropbox service, the company also has a Basic account with a 500 document threshold. It adds documents to the Dropbox service at an average rate of 50 documents/week (comprising 2GB/week). Therefore, a predictive algorithm determines that the company will reach capacity in the Dropbox-Basic account in approximagely 10 weeks (critical date is Date 1).

The SaaS Broker identifies available options in advance of the earliest critical date 10 weeks out (Date 1) so that any solutions having a lead time can be implemented before actually reaching the critical date Date 1. One option identified is that when the first critical date (Date 1) is reached, documents can be sent over to the Box service, which still has available capacity without a service upgrade at that time. Of course, doing so with then mean that the critical date Date 2 for the Box must be reassessed, since the 1 GB/week average will have changed.

Other options identified are that additional service levels can be purchased (or removed) in order to maximize or minimize some particular variable or set of variables, including cost, speed, functionality, complexity, redundancy, uptime, etc. The SaaS Broker can accomodate business aspects such as contract durations, lead times, etc. in making its determinations. The set of options can then be presented on the SaaS Broker Console or some other form of output device so that a user can review it and make a decistion. Alternately, the system could be automated to make the decision on its own in order to maximize or minimize the variable or variable set noted above. Or, it could be manual up to some point, and then automated at some other. For example, if a resource is getting low, i.e., in a "yellow flag" area, the ultimate decision could be left to a user, whereas if the resource is in a critical state, i.e., in a "red flag" area, the automated SaaS Broker could make the decision.

The critical dates and critical states can also be determined based on business-related criteria. For example, if a contract having a one-year term expires in two weeks, the SaaS Broker to perform the same types of analyses as if a technical critical data was being approached and take the same types of responsive actions.

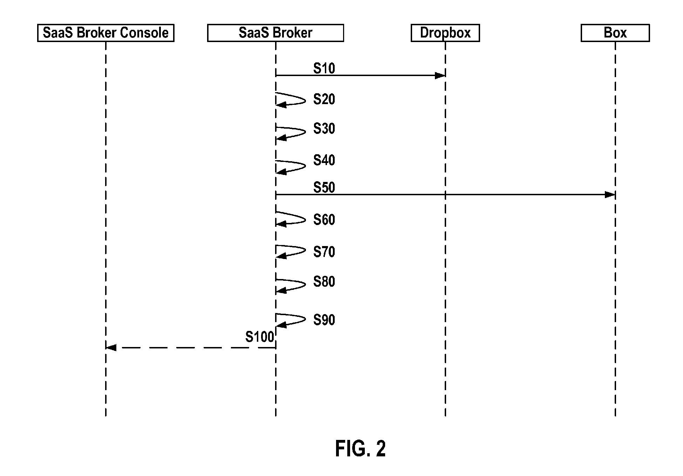

Figure 2 illustrates a basic flow in the monitoring system. As can be seen, the SaaS Broker, in step S10, requests a list of documents or information about the number of documents (or any other relevant property, parameter, or related measure) on the Dropbox service. It then calculates S20 a difference value from the last time it made the request. Based on this information, and the delta time from the last request, the SaaS Broker can determine S30 a rate of change. Since the SaaS Broker has information related to the threshold of Dropbox, e.g., its 500 document threshold in the Dropbox-Basic account, it can then determine a critical date at which time the Dropbox-Basic account will be exhausted. Based on the information so obtained, the SaaS Broker can determine S40 what the next threshold or critical date is.

A similar procedure can be performed with respect to the Box service. The SaaS Broker in step S50, requests information about the storage space (or any other relevant property, parameter, or related measure) on the Box service. It then calculates S60 a difference value from the last time it made the request. Based on this information, and the delta time from the last request, the SaaS Broker can determine S70 a rate of change. Since the SaaS Broker has information related to the threshold of Box, e.g., its 20GB threshold in the Box-Basic account, it can then determine a critical date at which time the Box-Basic account will be exhausted. Based on the information so obtained, the SaaS Broker can determine S80 what the next threshold or critical date is.

The SaaS Broker can thus determine the rate of change information S90 to reach the respective critical dates for the services, and notify the user S100 of any approaching thresholds in advance of them occurring.

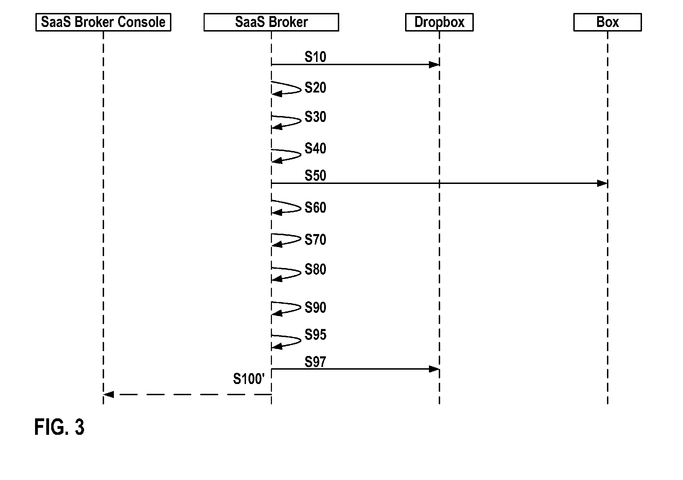

Figure 3 is similar to Figure 2, and the description of similar steps S10-S90, S100, will not be repeated. However, in Figure 3, the SaaS Broker is able to check S95 an upgrade policy and associated costs, lead times, agreement terms, etc. in order to make a decision. In the Example shown, the SaaS Broker forsees a critical need for more storage space, checks the upgrade policy of Dropbox, and determines that an upgrade to a Dropbox-Pro50 account is the most cost-effective solution for an upgrade. It makes sure adequat funding exists for executing the upgrade, and then upgrades S97 to the Dropbox-Pro50 service tier. It then provides a notification of the upgrade to the user S100'. Thus, the SaaS Broker can automatically increment service tiers (within a defined policy, such as a budget) to accommodate the way the services are being used by the end user.

In addition, the SaaS Broker can obtain information that is not necessarily directly related to the first service, but is usable with respect to other available (and possibly alternative) services. For example, even though the SaaS Broker knows that the Dropbox service criteria relates to a "number of documents" threshold, it can still make inquiries and calculations related to GB of storage space-it knows that this is not relevant for expanding or contracting the Dropbox service itself, but it also knows that other services that might become involved in the decisionmaking and used as alternatives *do* take GB of storage space into account. Thus, the SaaS Broker's inquiry to Dropbox may include information about GB of storage (or any other relevant variable) and not just about the number of documents.

Similarly, the SaaS Broker's inquiry to Box may include information about number of documents, even though Box's threshold criteria relates to GB of storage, and not number of documents.

The above examples illustrate an embodiment related to disk storage capacity (in terms of GB or number of documents), but any measurable or determinable value can be taken into account, such as processing, storage, and network capacities. This provides a significant advantage to scalable systems/architectures.

In addition, as a part of the business restrictions taken into consideration, business factors/restrictions can also apply to the monitoring, i.e., there may be a cost for performing the monitoring (e.g., a cost for an API call to determine available storage space remaining). Thus, the cost of performing the monitoring itself can be varied depending on the criticality of the resource or a measure of variance associated with the monitored variable.

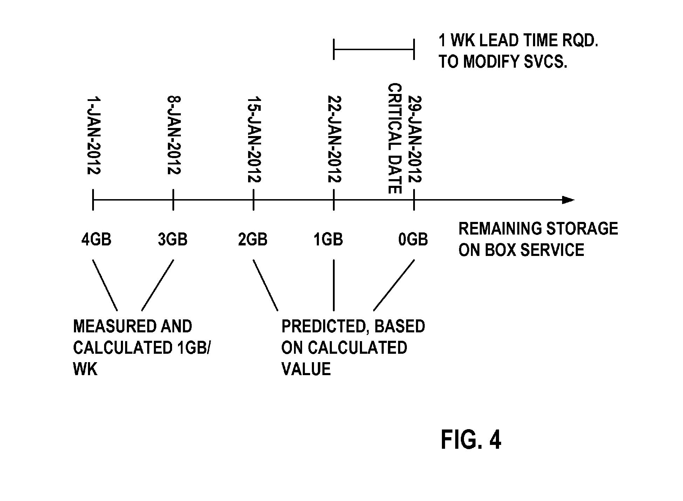

Figure 4 is a timeline illustrating an exemplary operation of the SaaS Broker. The Box service, measures that Box has 4GB remaining on January 1, 2012, and then measures that Box has 3GB remaining on January 8, 2012, one week later. It deduces that the Box service storage is being consumed at 1 GB/wk, and thus, there are three weeks remaining before the storage runs out. It also knows, from its business data, that Box requires a 1 week lead time to upgrade service. Therefore, the SaaS Broker can determine the critical date for upgrading the service as being January 22, 2012, instead of January 29, 2012, when the space is actually determined to run out. These dates could be adjusted based on later measurements taken on January 15, 2012, for example.

Weighting factors and other criteria could be used by the SaaS Broker to identify criteria that is more important. For example, it may be determined that a faster storage speed on Box is worth $1/GB/month more when deciding which server to use as the critical date approaches. Other criteria can be implemented as well-for example, the SaaS Broker could determine that 5% remaining capacity is the critical state, instead of 0%. In this way, the system can be extremely flexible in adapting to the changing need of users and modifiable based on the expandability of the cloud services.

The SaaS Broker can be designed to continually monitor the service usage and can alert either individual users or the company account administrators when service thresholds, a function of usage patterns, technical constraints, and business constraints are approaching. The SaaS broker can also suggest alternative service usage strategies since it is aware of the capabilities of all the services that a company is enrolled (e.g., Dropbox and Box).

The system or systems described herein may be implemented on any form of computer or computers and the components may be implemented as dedicated applications or in client-server architectures, including a web-based architecture, and can include functional programs, codes, and code segments. Any of the computers may comprise a processor, a memory for storing program data and executing it, a permanent storage such as a disk drive, a communications port for handling communications with external devices, and user interface devices, including a display, keyboard, mouse, etc. When software modules are involved, these software modules may be stored as program instructions or computer readable codes executable on the processor on a non-volatile computer-readable media such as read-only memory (ROM), random-access memory (RAM), CD-ROMs, magnetic tapes, floppy disks, and optical data storage devices. The computer readable recording medium can also be distributed over network coupled computer systems so that the computer readable code is stored and executed in a distributed fashion. This media is readable by the computer, stored in the memory, and executed by the processor.

All references, including publications, patent applications, and patents, cited herein are hereby incorporated by reference to the same extent as if each reference were individually and specifically indicated as incorporated by reference and were set forth in its entirety herein.

For the purposes of promoting an understanding of the principles of the invention, reference has been made to the preferred embodiments illustrated in the drawings, and specific language has been used to describe these embodiments. However, no limitation of the scope of the invention is intended by this specific language, and the invention should be construed to encompass all embodiments that would normally occur to one of ordinary skill in the art.

Embodiments of the invention may be described in terms of functional block components and various processing steps. Such functional blocks may be realized by any number of hardware and/or software components that perform the specified functions. For example, the embodiments may employ various integrated circuit components, e.g., memory elements, processing elements, logic elements, look-up tables, and the like, which may carry out a variety of functions under the control of one or more microprocessors or other control devices. Similarly, where the elements are implemented using software programming or software elements, embodiments of the invention may be implemented with any programming or scripting language such as C, C++, Java, assembler, or the like, with the various algorithms being implemented with any combination of data structures, objects, processes, routines or other programming elements. Functional aspects may be implemented in algorithms that execute on one or more processors. Furthermore, embodiments of the present invention could employ any number of conventional techniques for electronics configuration, signal processing and/or control, data processing and the like. The words "mechanism" and "element" are used broadly and are not limited to mechanical or physical embodiments, but can include software routines in conjunction with processors, etc.

The particular implementations shown and described herein are illustrative examples of the invention and are not intended to otherwise limit the scope of the invention in any way. For the sake of brevity, conventional electronics, control systems, software development and other functional aspects of the systems (and components of the individual operating components of the systems) may not be described in detail. Furthermore, the connecting lines, or connectors shown in the various figures presented are intended to represent exemplary functional relationships and/or physical or logical couplings between the various elements. It should be noted that many alternative or additional functional relationships, physical connections or logical connections may be present in a practical device. Moreover, no item or component is essential to the practice of the invention unless the element is specifically described as "essential" or "critical".

The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

The use of the terms "a" and "an" and "the" and similar referents in the context of describing the invention (especially in the context of the following claims) should be construed to cover both the singular and the plural. Furthermore, recitation of ranges of values herein are merely intended to serve as a shorthand method of referring individually to each separate value falling within the range, unless otherwise indicated herein, and each separate value is incorporated into the specification as if it were individually recited herein. Finally, the steps of all methods described herein are performable in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed.

## Claims

1. A method for optimizing future resource usage in a cloud environment comprising first and second cloud services, each cloud service being associated with at least one of technical and business restrictions defining a maximum capacity, the method comprising:
monitoring current usage patterns of the cloud services;
predicting future usage patterns based on the monitored usages;
calculating an estimated future time to reach a technical or business
restriction for the first cloud service based on the predicted future usage patterns; and
adjusting, at a later time associated with the estimated future time, the
maximum capacity associated with at least one of the first cloud service and the second cloud service based on the calculation of the estimated future time.

2. The method of claim 1, wherein the cloud services are data storage services.

3. The method of claim 2, wherein the restriction is a maximum storage capacity.

4. The method of claim 1, further comprising:
calculating a second estimated future time to reach a technical or business
restriction for the second cloud service based on the predicted future usage patterns; and
rerouting user resource usage from the first cloud service to the second cloud
service when the estimated future time is nearer to a present time than the second estimated future time.

5. The method of claim 1, wherein the restriction is selected from the group consisting of a processor capacity, a storage capacity, a communication network capacity, and a throughput capacity.

6. The method of claim 5, wherein the restriction is selected from the group consisting of a number of application program interface (API) requests per hour and a storage capacity limitation.

7. The method of claim 1, wherein the adjusting incorporates both a technical restriction and a business restriction.

8. The method of claim 7, wherein the business restriction is selected from the group consisting of a capacity cost, a per request cost, a per user cost, and a subscription cost.

9. The method of claim 1, wherein the usage patterns are selected from the group consisting of frequency of service access, volume of access requests to the services, volume of requests to supporting APIs, and interaction with content level.

10. The method of claim 1, wherein a first primary technical or business restriction for the first cloud service and a second primary technical or business restriction for the second cloud service are non-identical metrics.

11. The method of claim 10, wherein the first primary restriction is storage capacity in bytes, and the second primary restriction is storage capacity in documents.

12. The method of claim 10, wherein the first primary restriction is utilized to adjust the maximum capacity on the second cloud service.

13. The method of claim 1, wherein the adjusting takes place at a predetermined time interval prior to the estimated future time.

14. The method of claim 1, further comprising:
determining a cost of the monitoring; and
adjusting a frequency of the monitoring based on the determined cost.

15. The method of claim 14, wherein the adjusting of the monitoring frequency is dependent upon a predetermined criticality of the resource or a variance associated with the monitored variable.

16. A system for optimizing future resource usage in a cloud environment comprising first and second cloud services, each cloud service being associated with at least one of technical and business restrictions defining a maximum capacity, the method comprising:
a monitor that runs on a processor of a computer that monitors current usage
patterns of the cloud services;
a predictor that predicts future usage patterns based on the monitored
usages;
an estimator that calculates an estimated future time to reach a technical or
business restriction for the first cloud service based on the predicted future usage patterns; and
a modification element that adjusts, at a later time associated with the
estimated future time, the maximum capacity associated with at least one of the first cloud service and the second cloud service based on the calculation of the estimated future time.

17. A non-transitory computer program product, comprising a computer usable medium having a computer readable program code embodied therein, said computer readable program code adapted to be executed to implement the method of claim 1.
